# FASCICULE DE BREVET EUROPEEN

(11) **EP 1 458 729 B1**
(45) Date de publication et mention de la délivrance du brevet: **08.03.2006**
(21) Numéro de dépôt: 02799843.4
(22) Date de dépôt: 20.12.2002
(51) Int. Cl.: C07F 5/02

(54) **COMPOSES (ARYL) (AMINO)BORANES, PROCEDE POUR LEUR PREPARATION**
(ARYL) (AMINO)BORANEN UND VERFAHREN ZUR DEREN HERSTELLUNG
(ARYL) (AMINO) BORANE COMPOUNDS, METHOD FOR PREPARING SAME

(30) Priorité: 21.12.2001 FR 0116734
(43) Date de publication de la demande: 22.09.2004
(73) Titulaire: CENTRE NATIONAL DE LA RECHERCHE SCIENTIFIQUE (CNRS), 75016 Paris (FR); UNIVERSITE DE RENNES I, F-35065 Rennes (FR)
(72) Inventeur: VAULTIER, Michel, F-35410 Châteaugiron (FR); ALCARAZ, Gilles, F-35000 Rennes (FR); DURIEZ, Christophe, F-78780 Maurecourt (FR); EUZENAT, Lisenn, Williamsville, NY14221 (US); RIBOURDOUILLE, Yann, F-67000 Strasbourg (FR)
(74) Mandataire: Sueur, Yvette
(86) Numéro de dépôt international: PCT/FR2002/004512
(87) Numéro de publication internationale: WO 2003/053981

(56) Documents cités:
- PATENT ABSTRACTS OF JAPAN vol. 003, no. 106 (E-135), 7 septembre 1979 (1979-09-07) & JP 54 083435 A (RICOH CO LTD), 3 juillet 1979 (1979-07-03)
- KRAEMER A ET AL: "Synthese und Struktur von 1,2-Bis (diisopropylamino)-1,2-diboretan Synthesis and Structure of 1,2-Bis(diisopropylamino)-1,2-diboretane" Z. NATURFORSCHR., vol. 45b, juillet 1990 (1990-07), pages 1019-1021, XP001105324
- KOESTER R ET AL: "CYCLISIERUNGEN VON BOR-STICKSTOFF-VERBINDUNGEN IN DER HITZE" JUSTUS LIEBIGS ANNALEN DER CHEMIE, VERLAG CHEMIE GMBH. WEINHEIM, DE, vol. 720, 1968, pages 23-31, XP001097997 ISSN: 0075-4617
- KRAEMER A ET AL: "SYNTHESE UND STRUKTUR EINES 1,2,5,6-TETRAHYDRO-1,2,5,6-TETRABOROCINS" ANGEWANDTE CHEMIE. INTERNATIONAL EDITION, VERLAG CHEMIE. WEINHEIM, DE, vol. 100, no. 7, 1988, pages 963-964, XP001105025 ISSN: 0570-0833
- ISHIYAMA T ET AL: "PALLADIUM (O)-CATALYZED CROSS-COUPLING REACTION OF ALKOXYDIBORON WITH HALOARENES: A DIRECT PROCEDURE FOR ARYLBORONIC ESTERS" JOURNAL OF ORGANIC CHEMISTRY, AMERICAN CHEMICAL SOCIETY, WASHINGTON, DC, US, vol. 60, no. 23, 1995, pages 7508-7510, XP000863639 ISSN: 0022-3263 cité dans la demande
- MURATA M ET AL: "NOVEL PALLADIUM(0)-CATALYZED COUPLING REACTION OF DIALKOXYBORANE WITH ARYL HALIDES: CONVENIENT SYNTHETIC ROUTE TO ARYLBORONATES" JOURNAL OF ORGANIC CHEMISTRY, AMERICAN CHEMICAL SOCIETY. EASTON, US, vol. 62, no. 19, 1997, pages 6458-6459, XP001135064 ISSN: 0022-3263 cité dans la demande

## Description

La présente invention concerne des composés (aryl)-(amino)boranes, ainsi qu'un procédé pour leur préparation.

Les acides et esters arylboroniques sont généralement préparés par borylation de dérivés organomagnésiens ou lithiens aromatiques. Ces méthodes sont coûteuses, nécessitent des conditions particulières et ne sont pas générales, ce qui les rend assez peu attractives. Ils ont également été préparés par réaction de composés tétraalkoxydibore avec des dérivés aromatiques bromés ou iodés en présence de catalyseurs au palladium (T. Ishiyama et al., J. Org. Chem., 1995, 60, 7508). Cette méthode ne fait pas intervenir d'organomagnésiens ou lithiens, mais la préparation des composés tétraalkoxydibore nécessite l'utilisation de sodium ou de potassium métallique fondu à haute température dans des solvants hautement inflammables, ce qui rend la méthode dangereuse. Le pinacolborane peut réagir avec des dérivés aromatiques bromés ou iodés en présence de catalyseurs au palladium pour donner des esters arylboroniques du pinacol (M. Murata et al., J. Org. Chem., 1997, 62, 6458). Cependant, le pinacolborane, préparé à partir du complexe borane-diméthylsulfure (Me₂S.BH₃), est un produit volatile, utilisé en excès et peu réactif. Les esters boroniques obtenus sont très stables et ne permettent pas une refonctionnalisation aisée autour de l'atome de bore.

Le but de la présente invention est de proposer des boranes utilisables notamment dans une réaction de couplage, c'est-à-dire une réaction de borylation de divers dérivés, qui peuvent être préparés par un procédé simple, qui présentent une stabilité suffisante pour être stockés, et qui peuvent être refonctionnalisés aisément. C'est pourquoi la présente invention a pour objet des composés aminoboranes ainsi qu'un procédé pour les préparer.

Les composés de la présente invention répondent à la formule A-BH-NR¹R² dans laquelle :
- R¹ et R² sont des groupes identiques ou différents choisis parmi les groupes alkyles linéaires, les groupes alkyles ramifiés, les groupes alkyles cycliques, les groupes arylalkyles, ou bien les deux groupes R¹ et R² forment ensemble un groupe alkylène, et
- A représente:
   a) un groupe aromatique éventuellement polycondensé, portant éventuellement au moins un substituant
   b) un groupe hétéroaromatique éventuellement polycondensé, portant éventuellement au moins un substituant
   c) un groupe choisi parmi les groupes vinyles, diényles, polyényles et alcynyles, portant éventuellement au moins un substituant

lesdits substituants éventuels des groupes définis en a), b) et c) étant choisis parmi les alkyles, les alkoxy, les amino, les dialkylamino, les halogènes, les groupements nitriles, les groupements esters, les groupements amides, les groupements aldéhydes protégés sous forme d'acétal ou de thioacétal, les groupements cétones protégés sous forme d'acétal ou de thioacétal, les groupements trialkylsilyle et les groupements dialkoxyboryle.

Lorsqu'un substituant R¹ ou R² est un groupe alkyle, il est choisi de préférence parmi les alkyles linéaires ayant de 2 à 20 atomes de carbone, les alkyles ramifiés ayant de 3 à 20 atomes de carbone, les cycloalkyles ayant de 3 à 20 atomes de carbone. A titre d'exemple, on peut citer l'isopropyle, le cyclohexyle, l'α-méthylbenzyle. Les substituants R¹ et R² peuvent être des groupes chiraux.

Lorsqu'un substituant R¹ ou R² est choisi parmi les groupes arylalkyles, il peut être un groupe R⁸-Ph-CH(R³) dans lequel Ph représente un groupe phényle, R⁸ représente H ou un substituant choisi parmi les halogènes, les alkyles, les alkoxy, les alkylthio, les groupements cétones protégés sous forme d'acétal ou de thioacétal, et les groupements trialkylsilyle, et R³ est un groupe alkyle ayant de 1 à 20 atomes de carbone. Le méthylbenzyle est particulièrement préféré.

Lorsque R¹ et R² forment un groupe alkylène, le groupe alkylène est de préférence un groupe -CR⁴R⁵-(CH₂)ₙ-CR⁶R⁷- dans lequel 3≤n≤5 et les substituants R⁴ à R⁷ sont choisis indépendamment les uns des autres parmi H et les radicaux alkyles ayant de 1 à 20 atomes de carbone. Le 1,1,5,5-tétraméthylpentylène est un biradical particulièrement préféré.

Comme exemple de substituant A, on peut citer en particulier le phényle, le tolyle et le méthoxyphényle.

Les composés de la présente invention peuvent être préparés par un procédé en deux étapes, dans lequel :
- Au cours de la première étape, on prépare un complexe amine-borane R¹R²NH.BH₃, puis on le transforme en aminoborane R¹R²NBH₂ par chauffage.
- Au cours de la deuxième étape, on fait réagir l'aminoborane R¹R²NBH₂ avec un composé A-X dans lequel X est un groupe partant, en présence d'une quantité catalytique d'un complexe d'un métal de transition et d'une base, dans un solvant organique aprotique ou une amine puis on élimine le solvant et les réactifs excédentaires. De préférence, le solvant a un point d'ébullition entre 50°C et 250°C. Le groupe partant X peut être par exemple un atome d'halogène, ou un groupement triflate, tosylate, mésylate, diazonium ou phosphate.

Dans un premier mode de réalisation, pour préparer le complexe amine-borane lors de la première étape, on fait réagir sous atmosphère inerte, une amine R¹R²NH avec une source de borane dans un solvant aprotique polaire à une température inférieure à 50°C, puis on élimine le solvant sous vide. La source de borane peut être un complexe commercial tel que Me₂S.BH₃ ou THF.BH₃. La durée de la réaction est au moins égale à 2 heures. Le solvant aprotique polaire utilisé dans cette étape est choisi de préférence parmi les éthers. On peut citer en particulier le THF, le dioxane, le DME ou diglyme, et le tertiobutylméthyléther (TBDME).

Dans un deuxième mode de réalisation, le complexe amine-borane peut être préparé au cours de la première étape par réaction du chlorhydrate de l'amine R¹R²NH,HCl avec NaBH₄ ou KBH₄ dans un solvant approprié tel que le THF ou un mélange éther/eau, selon un procédé décrit par Polivka et al.(Coll. Czech. Chem. Commun., 1969, 34, 3009). Le complexe amine-borane R¹R²NH.BH₃ est ensuite isolé par filtration et élimination du solvant sous vide.

Dans les deux cas, l'aminoborane R¹R²NBH₂ est ensuite obtenu par chauffage du complexe amine-borane, suivi d'une distillation. Le chauffage est effectué à une température qui dépend de la nature des groupements R¹ et R². Elle est de 130°C pour R¹ = R² = isopropyle. L'aminoborane pur obtenu après distillation peut être stocké sous atmosphère inerte d'azote ou d'argon.

Le solvant organique de la deuxième étape est choisi de préférence parmi les carbures aromatiques, les amines et les éthers. On peut citer en particulier le dioxane, le THF, le toluène et le xylène.

La base introduite dans le milieu réactionnel lors de la deuxième étape du procédé est choisie parmi les trialkylamines cycliques ou linéaires, les amines secondaires cycliques ou linéaires, les amines aromatiques du type pyridine ou quinoléine.

Le complexe d'un métal de transition est de préférence un composé de palladium stabilisé par un ligand. Le composé de palladium peut être choisi parmi PdCl₂, le diacétylacétonate de palladium Pd(acac)₂, l'acétate de palladium Pd(OAc)₂, le cyanure de palladium Pd(CN)₂, le chlorure d'allylpalladium (CH₂=CHCH₂PdCl)₂. Le ligand peut être une phosphine, choisie par exemple parmi la triphénylphosphine PPh₃, le triphénylphosphinetrisulfonate de sodium TPPTS. Le ligand peut en outre être un arsine tel que par exemple le triphénylarsine, un nitrile aromatique ou non choisi par exemple parmi l'acétonitrile ou le benzonitrile, un isonitrile choisi par exemple parmi l'isonitrile de méthyle ou l'isonitrile de tertiobutyle, une imine aromatique ou hétéroaromatique telle que par exemple la N-méthylbenzylimine, ou un imidazo-2-ylidène tel que par exemple le N,N'-dibenzylimidazo-2-ylidène.

Un composé selon la présente invention peut être utilisé comme réactif pour diverses réactions, et notamment pour des couplages de Suzuki-Miyaura.

Quelques réactions particulières sont illustrées ci-après à titre d'exemple par un schéma réactionnel, donné dans

Quelques réactions particulières sont illustrées ci-après à titre d'exemple par un schéma réactionnel, donné dans chacun des cas pour un composé aminoborane dans lequel R¹ = R² = iPr et A est un groupe phényle portant un substituant Z. Bien entendu, des réactions similaires peuvent être effectuées à l'aide de composés aminoborane obtenus à partir d'amines autres que la diisopropylamine.
- La réaction d'un composé selon l'invention avec une diéthanolamine permet d'obtenir un arylboratrane, selon le schéma réactionnel suivant : 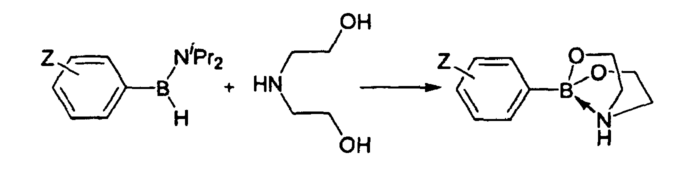
- La réaction d'un composé selon l'invention avec le 2,2-**diméthylpropane-1,3-diol** permet d'obtenir un un 2-aryl-5,5-diméthyl-1,3,2-dioxaborinane, selon le schéma réactionnel suivant : 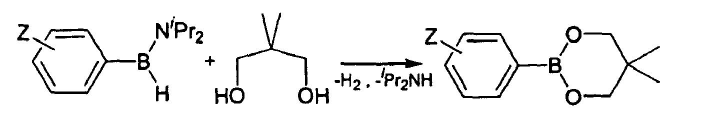
- La réaction d'un composé selon l'invention avec du méthanol en excès permet d'obtenir un aryldiméthoxyborane qui peut ensuite être hydrolysé en acide arylboronique, selon le schéma réactionnel suivant : 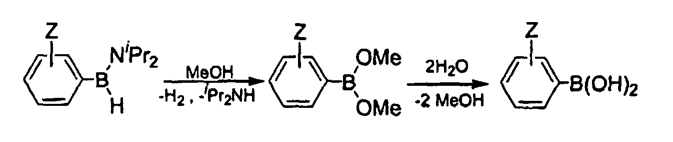
- La réaction d'un composé selon l'invention avec un composé A-X en présence d'un catalyseur de Pd(0) et d'une base permet d'obtenir un composé (B,B-diaryl)aminoborane, selon le schéma réactionnel suivant : 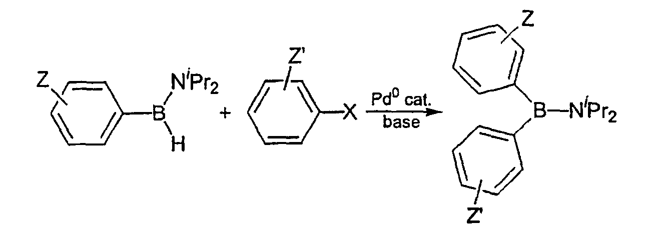
- la réaction d'un composé selon l'invention avec un composé A-Z en présence d'un catalyseur de Pd(0), d'une base et d'eau permet d'obtenir un composé Ar-Ar, selon le schéma réactionnel suivant :

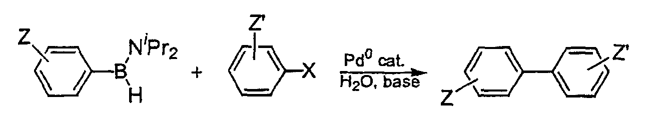

La présente invention est décrite ci-après plus en détail, à l'aide d'exemples auxquels elle n'est toutefois pas limitée.

### Exemple 1

### (p-tolyl) (diisopropylamino)borane

### Préparation du complexe diisopropylamine-borane

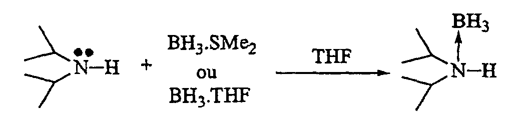

Dans un Schlenk de 250 ml préalablement séché sous argon, on introduit sous agitation 50 ml (357 mmol) de diisopropylamine fraîchement distillée sur hydrure de calcium et 50 ml de THF anhydre. On refroidit le mélange réactionnel à -78°C à l'aide d'un bain froid éthanol/azote liquide et on instille 36,5 ml du complexe commercial BH₃.SMe₂ 9,77M (357 mmol). On laisse remonter en 2h la température du milieu réactionnel jusqu'à l'ambiante. On évapore ensuite le THF à la pompe à palette sous un vide de 0,01 mmHg et l'on obtient 41 g du complexe diisopropylamine-borane sous la forme d'un liquide de consistance sirupeuse. Les caractéristiques spectroscopiques du composés sont données ci-après.
- RMN ¹H (CDCl₃, δppm/TMS) :: 1,25 (q, 3H, ¹J_{BH}=97Hz, BH₃)
1,26 (d, 6H, ³J_{HH}=2,6Hz, CH₃)
1,29 (d, 6H, ³J_{HH}=2,6Hz, CH₃)
3,10 (dhept, 2H, ³J_{HH}=2,6Hz, CH)
3,45 (m, 1H, NH)
- RMN ¹¹B (CDCl₃, δppm/Et₂O.BF₃):: -21,4 (q, ¹J_{BH}=97Hz, BH₃)
- RMN ¹³C (CDCl₃, δppm/TMS): 19,4 (s, 2C, CH₃)
21,4 (s, 2C, CH₃)
52,5 (s, 2C, CH)
- Spectrométrie de masse:: calculée pour C₆H₁₇N¹¹B]^{.+}:114,1454
trouvée (i.e.) : 114,1432 (19 ppp)

### Préparation du diisopropylaminoborane :

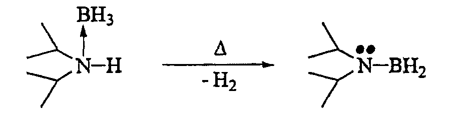

A l'aide d'un bain de sable, un Schlenk de 250 ml contenant 41g (356,5 mmol) du complexe diisopropylamine-borane pur et surmonté d'une colonne à distiller munie d'un thermomètre rodé et connectée à un ballon récepteur ainsi qu'à un bulleur est porté à 160°C (température du sable). Un dégagement régulier de dihydrogène se produit et se maintient au cours de la montée en température. La température de distillation du diisopropylaminoborane en tête de colonne est de 91-93°C. Le diisopropylaminoborane distille sous la forme d'un liquide incolore. On récupère 36g (318,5 mmol) de composé, correspondant à un rendement de 89%.
Caractéristiques spectroscopiques :
- RMN ¹H (CDCl₃, δppm/TMS) :: 1,3 (d, 12H, ³J_{HH}=6,7 Hz, CH₃)
3,4 (hept, 2H, ³J_{HH}=6,7 Hz, CH)
5,0 (q, 2H, ¹J_{BH}=125,9 Hz, BH₂)
- RMN ¹¹B (CDCl₃, δppm/Et₂O.BF₃):: 35,4 (t, ¹J_{BH}=126 Hz, BH₂)
- RMN ¹³C (CDCl₃,δppm/TMS): 23,8 (s, 4C, CH₃)
51,1 (s, 2C, CH)
- Infra-rouge: 2488 et 2460 cm⁻¹ (ν_{BH})
- Spectrométrie de masse :: calculée pour C₆H₁₆N¹¹B]^{•+} :113,1376
trouvée (i.e.) : 113,1371 (4 ppm)

### Préparation du (p-tolyl) (diisopropylamino)borane

Dans un schlenk de 250 ml préalablement séché sous argon on a introduit 0,343 g (0,49 mmol) de catalyseur au palladium (Ph₃P)₂PdCl₂, 2,129 g (9,8 mmol) de p-iodotoluène, 6,8 ml (49 mmol) de triéthylamine, 30 ml de dioxane et 3 ml (19,5 mmol) de diisopropylaminoborane. Le schlenk a ensuite été muni d'un réfrigérant connecté par le haut à un bulleur. Le mélange réactionnel a été mis sous agitation magnétique et chauffé à 70°C pendant 15 h. On a ensuite laissé le mélange réactionnel revenir sous argon à la température ambiante. Le solvant et les excès de réactifs ont été évaporés sous le vide d'une pompe à palette. Le résidu obtenu a été repris dans de l'éther anhydre, puis filtré sous argon sur Celite® 545 sèche. Le filtrat a été à nouveau évaporé et le résidu distillé au Kügel-Rohr (T=30-35°C) sous un vide de 0,01 mm Hg. On a isolé 1,694 g (Rdt = 85%) d'une huile incolore. Les caractéristiques spectroscopiques sont les suivantes :
- RMN¹H (CDCl₃, δppm/TMS): 1,22 (d, 6H, ³J_{HH}=6, 6 Hz, CH₃ iPr)
1,38 (d, 6H, ³J_{HH}=6,6 Hz, CH₃ iPr)
2,44 (s, 3H, CH₃ Tolyl)
3,45 (hept, 1H, ³J_{HH}=6,6 Hz, CH iPr)
4,33 (hept, 1H, ³J_{HH}=6,6 Hz, CH iPr)
7,23 (d, 2H, ³J_{HH}=7,8 Hz, CH aryl)
7,45 (d, 2H, ³J_{HH}=7,8 Hz, CH aryl)
- RMN¹³C (CDCl₃, δppm/TMS): 21,9 (s, 1C, CH₃ Tolyl)
22,7 (s, 2C, CH₃ iPr)
27,6 (s, 2C, CH₃ iPr)
45,0 (s, 1C, CH iPr)
49,7 (s, 1C, CH iPr)
128,8 (s, 2C, CH aryl)
133,6 (s, 2C, CH aryl)
137,8 (s, 1C, C^{IV}-CH₃ aryl)
- RMN¹¹B (CDCl₃, δppm/Et₂O.BF₃): 37,8 (d, ¹J_{BH}=80,5 Hz, BH)
- Infra-rouge: 2477 et 2443 cm⁻¹ (V_{BH})
- Spectrométrie de masse: calculée pour C₁₃H₂₂BN]⁺: 203,18453
Trouvée(i.e.): 203,1845 (0,2 ppm)

### Exemple 2

On a préparé divers aryl(diisoprolymamino)boranes à partir de diisopropylamine-borane obtenu conformément au mode opératoire décrit dans l'exemple 1, selon le procédé suivant : 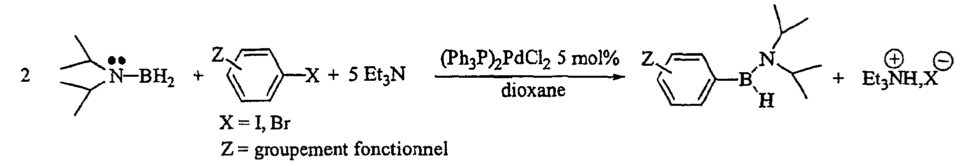
Dans un Schlenk de 250 ml préalablement séché sous argon on introduit 1 équivalent de catalyseur au palladium (Ph₃P)₂PdCl₂, 20 équivalents d'halogénure d'aryle, 100 équivalents de triéthylamine, 700 équivalents de dioxane et 40 équivalents de diisopropylaminoborane. Le Schlenk est ensuite muni d'un réfrigérant connecté par le haut à un bulleur. Le mélange réactionnel est mis sous agitation magnétique et chauffé à 70°C pendant 15 h. On laisse ensuite le mélange réactionnel revenir sous argon à la température ambiante. Le solvant et les excès de réactifs sont évaporés sous le vide d'une pompe à palette. Le résidu obtenu est repris dans de l'éther anhydre puis filtré sous argon sur celite® 545 sèche. Le filtrat est à nouveau évaporé et le résidu est distillé au Kügel-Rohr sous le vide d'une pompe à palette. Le tableau suivant indique le produit obtenu à partir de divers halégénures, ainsi que le rendement du produit isolé.

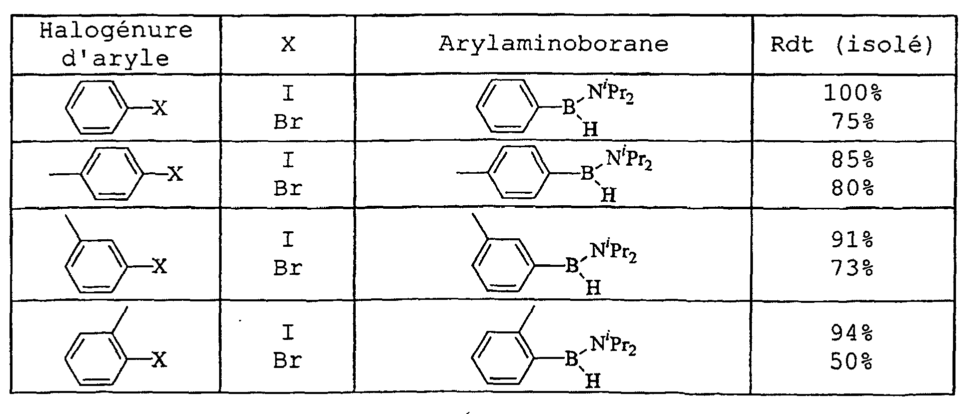

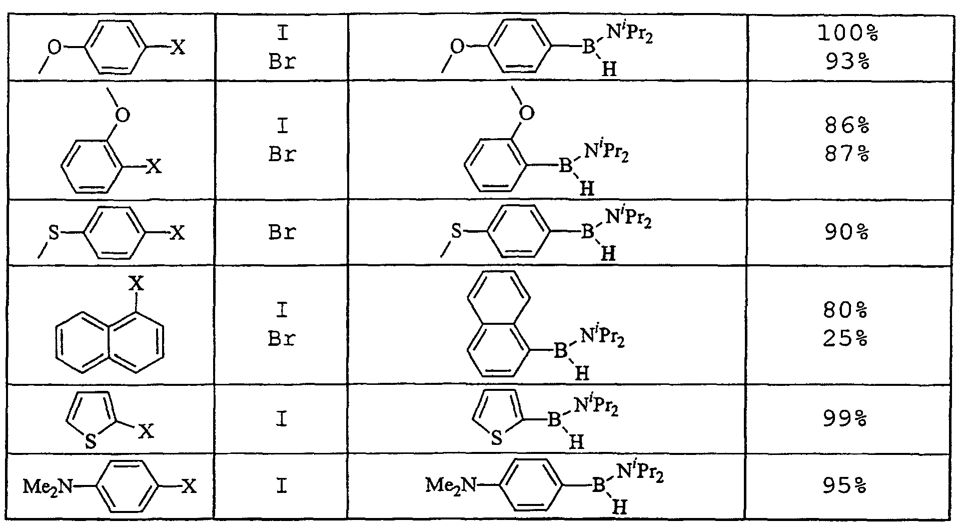

### Exemple 3

### (p-méthoxyphényl)(N,N-dicyclohexylamino)borane

### Préparation du complexe N,N-dicyclohexylamine-borane

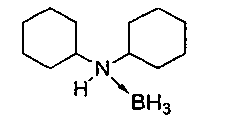

Par un procédé analogue à celui de l'exemple 1, on a préparé le complexe N,N-dicyclohexylamine-borane en utilisant la N,N-dicyclohexylamine à la place de la diisopropylamine. On a obtenu 9,52 g du complexe dicyclohexylamine-borane sous la forme d'un solide blanc (rendement : 97%). Les caractéristiques spectroscopiques du composés sont données ci-après.
- RMN ¹H (CDCl₃, δppm/TMS) :: 1,00-1,50 (m, 4 H, CH₂ cyclohexyl)
1,50-2,05 (m, 16 H, CH₂ cyclohexyl)
2,70-3,05 (m, 2 H, CH₂ cyclohexyl)
- RMN ¹³C (CDCl₃, δppm/TMS) :: 25,7 (s, 2 C, CH₂ cyclohexyl)
25,8 (s, 2 C, CH₂ cyclohexyl)
26,1 (s, 2 C, CH₂ cyclohexyl)
30,0 (s, 2 C, CH₂ cyclohexyl)
31,3 (s, 2 C, CH₂ cyclohexyl)
61,0 (s, 2 C, CH cyclohexyl)
- RMN ¹¹B (CDCl₃, δppm/Et₂O.BF₃) :: -20,5 (q,1 B,¹J_{BH} = 83 Hz, BH₃)
- IR :: 2305 et 2409 cm⁻¹ (ν_{BH}).

### Préparation du N,N-dicyclohexylaminoborane

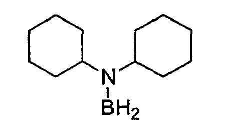

Par un procédé analogue à celui de l'exemple 1, on a préparé le N,N-dicyclohexylaminoborane en utilisant le complexe N,N-dicyclohexylamine-borane à la place du complexe diisopropylamine-borane. Le N,N-dicyclohexylaminoborane distille en tête de colonne vers 129°C sous 0,01 mm Hg. On récupère 3,644 g (18,9 mmol) de composé sous forme d'une huile incolore, correspondant à un rendement de 79 %.
Caractéristiques spectroscopiques :
- RMN ¹H (CDCl₃, δppm/TMS):: 1,00-2,00 (m, 20 H, CH₂ cyclohexyl)
2,75-3,00 (m, 2H, CH cyclohexyl)
- RMN ¹³C (COCl₃, δppm/TMS):: 25, 7 (s,2C,CH₂ cyclohexyl)
26,5 (s, 4C, CH₂ cyclohexyl)
36,0 (s, 4C, CH₂ cyclohexyl)
62,1 (s, 2C, C quater. cyclohexyl)
- RMN ¹¹B (CDCl₃, δppm/Et₂O.BF₃) :: 35,2 (t, BH₂, ¹J_{BH} =118 Hz)
- Spectrométrie de masse :: calculée pour C₁₂H₂₄BN]^{.+} 193,2018
Trouvée (i.e.): 193,1961 (20 ppm)
- IR :: 2438, 2461 et 2527 cm⁻¹ (ν_{BH}).

### Préparation du (p-méthoxyphényl)(dicyclohexylamino)borane

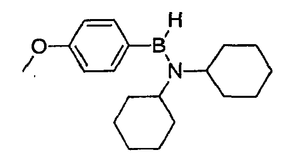

Dans un Schlenk de 100 ml préalablement séché sous argon on a introduit 1,130 g (0,19 mmol) de catalyseur au palladium (Ph₃P)₂PdCl₂, 0,868 g (3,7 mmol) de p-iodotoluène, 2,5 ml (18,5 mmol) de triéthylamine, 15 ml de dioxane et 0,708 g (3,7 mmol) de dicyclohexylaminoborane. Le Schlenk a ensuite été muni d'un réfrigérant connecté par le haut à un bulleur. Le mélange réactionnel a été mis sous agitation magnétique et chauffé à 70°C pendant 15 h. On a ensuite laissé le mélange réactionnel revenir sous argon à la température ambiante. Le solvant et les excès de réactifs ont été évaporés sous le vide d'une pompe à palette. Le résidu obtenu a été repris dans de l'éther anhydre, puis filtré sous argon sur Celite® 545 sèche. Le filtrat a été à nouveau évaporé et le résidu distillé au Kügel-Rohr (T=40°C) sous un vide de 0,01 mm Hg. On a isolé 0,884 g (Rdt = 81%) d'un solide blanc. Les caractéristiques spectroscopiques sont les suivantes :
- RMN¹H ((CDCl₃, δppm/TMS)): 1,25 (m, 4H, CH₂ cyclohexyl)
1,70 (m, 16H, CH₂ cyclohexyl)
2,90 (m, 2H, CH cyclohexyl)
3,87 (s, 3H, CH₃ anisyl)
6,96 (d, 2H, ³J_{HH}=8,56 Hz, CH aryl)
7,46 (d, 2H, ³J_{HH}=8,56 Hz, CH aryl)
- RMN¹³C ((CDCl₃, δppm/TMS)): 25,7 (s, CH₂ cyclohexyl)
25,8 (s, CH₂ cyclohexyl)
25,9 (s, 2C, CH₂ cyclohexyl)
26,8 (s, 2C, CH₂ cyclohexyl)
32,9 (s, 2C, CH₂ cyclohexyl)
37,7 (s, 2C, CH₂ cyclohexyl)
55,0 (s, CH₃ anisyl)
55,1 (s, CH cyclohexyl)
58,2 (s, CH cyclohexyl)
113,2 (s, 2C, CH aryl)
135,5 (s, 2C, CH aryl)
159,5 (s, C^{IV}-OCH₃ aryl)
- RMN¹¹B (CDCl₃,δppm/Et₂O.BF₃): 38,1 (s, ν_{1/2} : 577,8 Hz, BH)
- Infra-rouge :: 2433 et 2477 cm⁻¹ (ν_{BH})
- Spectrométrie de masse: calculée pour C₁₉H₃₀BNO]⁺ : 299,24205
Trouvée (i.e.) : 299,24294 (2 ppm)

### Exemple 4

### (p-méthoxyphényl) (2,2,6, 6-tétraméthylpipéridino)borane

### Préparation du complexe 2,2,6,6-tetraméthylpiperidine-borane

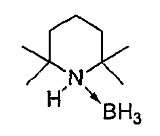

Par un procédé analogue à celui de l'exemple 1, on a préparé le complexe 2,2,6,6-tetraméthylpiperidine-borane en utilisant la 2,2,6,6-tétraméthylpiperidine à la place de la diisopropylamine. On a obtenu 9,41 g du complexe 2,2,6,6-tétraméthylpiperidine-borane sous la forme d'un solide blanc (rendement quantitatif). Les caractéristiques spectroscopiques du composé sont données ci-après.
- RMN ¹H (CDCl₃, δppm/TMS) :: 1,38 (s, 6 H, CH₃)
1,44 (s, 6 H, CH₃)
1,50-1,80 (m, 6 H, CH₂)
- RMN ¹³C (CDCl₃, δppm/TMS) :: 17,0 (s, 1 C, CH₂)
21,0 (s, 2 C, CH₃)
34,3 (s, 2 C, CH₃)
41,3 (s, 1 C, CH₂)
59,0 (s, 2 C, C quaternaire)
- RMN ¹¹B (CDCl₃, δppm/Et₂O.BF₃) :: -22,2 (q, 1 B, ¹J_{BH} = 96 Hz, BH₃).

### Préparation du 2,2,6,6-tétraméthylpiperidino-1-borane

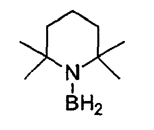

Par un procédé analogue à celui de l'exemple 1, on a préparé le 2,2,6,6-tétraméthylpiperidino-1-borane en utilisant le complexe 2,2,6,6-tétraméthylpiperidino-1-borane à la place du complexe diisopropylamine-borane. Le 2,2,6,6-tetramethylpiperidino-1-borane distille en tête de colonne à 50°C s/s 0.01 mm Hg. On récupère 1,842 g (12,1 mmol) d'une huile incolore, correspondant à un rendement de 81 %.
Caractéristiques spectroscopiques :
- RMN ¹H (CDCl₃, δppm/TMS) :: 1,25 (s, 12H, CH₃)
1,40-1,70 (m, 6H, CH₂)
- RMN ¹³C (CDCl₃, δppm/TMS) :: 15, 7 (s, 2C, CH₂)
34,0 (s, 4C, CH₃)
37,8 (s, 2C, CH₂)
54,2 (s, 1C, C^{IV})
- RMN ¹¹B (CDCl₃, δppm/Et₂O.BF₃) :: δ = 35,7 (t, 1B, ¹J_{BH} =127 Hz, BH₂)
- Spectrométrie de masse : [M-CH₃']: calculée pour: C₈H₁₇BN]⁺: 138,1454
Trouvée (i.e.) = 138,1432 (16 ppm)
- IR :: 2488, 2519 et 2564 cm⁻¹ (ν_{BH}).

### Préparation du (p-méthoxyphenyl)(2,2,6,6-tétraméthylpiperidino)borane

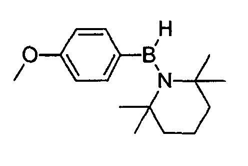

Par un procédé analogue à celui de l'exemple 3, on a préparé le borane ci-dessus en utilisant le (2,2,6,6-tétraméthylpiperidino)borane à la place du dicyclohexylaminoborane. On a isolé 1,562 g d'une huile incolore qui distille à 90°C ous 0,01 mm Hg. Les caractéristiques spectroscopiques sont les suivantes :
- RMN¹H (CDCl₃, δppm/TMS) :: 1,44 (s large, 12 H, CH₃ piperidine)
1,76 (m, 6H, CH₂ piperidine)
3,87 (s, 3H, O-CH₃)
6,95 (d, 2H, ³J_{HH}=8,45Hz, CH aryl)
7,37 (d, 2H, ³J_{HH}=8,45Hz, CH aryl)
- RMN¹³C (CDCl₃, δppm/TMS) :: 15,7 (s, 1C, CH₂ piperidine)
35,0 (s, 4C, CH₃ piperidine)
37,4 (s, 2C, CH₂ piperidine)
55,0 (s, 1C, O-CH₃)
56,1 (s, 2C, C^{IV} Piperidine)
113,0 (s, 2C, CH aryl)
132,0 (s, 2C, CH aryl)
158,3 (s, 1C, C^{IV}-OMe aryl)
- RMN¹¹B (CDCl₃, δppm/Et₂O.BF₃) :: 41,5 (s large, 1B, ν_{1/2}=491,1 Hz, BH)
- Spectrométrie de masse :: [M-CH₃⁺] calculée pour C₁₅H₂₃BNO]⁺: 244,18727
Trouvée (i.e.) 244,18764 (1 ppm)
- Infra-rouge :: 2414 et 2468 cm⁻¹ (ν_{BH})

### Exemple 5

### (p-méthoxyphényl)[(méthylbenzyl)(isopropyl)amino]borane

### Préparation du complexe [(méthylbenzyl)(isopropyl)amine]-borane

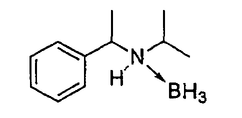

Par un procédé analogue à celui de l'exemple 1, on a préparé le complexe (méthylbenzyl)(isopropyl)amine-borane en utilisant la (méthylbenzyl)(isopropyl)amine à la place de la diisopropylamine. On a obtenu 16,33 g du complexe (méthylbenzyl)(isopropyl)amine-borane sous la forme d'un solide blanc (rendement quantitatif). Les caractéristiques spectroscopiques du composés sont données ci-après.
- RMN ¹H(CDCl₃, δppm/TMS):: 1,18 (d, 3H, CH₃ isopropyl, ³J_{HH} = 6, 7 Hz)
1, 24 (d, 3H, ³J_{HH} = 6, 7 Hz, CH₃ isopropyl)
1,71 (d, 3H, ³J_{HH} = 6,8 Hz, Ph-CH-CH₃)
2,99 (hept d, 1H, ³J_{HH} = 6,7 Hz, CH isopropyl)
3,41 (s large, 1H, N-H)
3, 96 (q, 1H, ³J_{HH} = 6,8 Hz, CH benzyl)
7, 39-7, 61 (m, 5H, CH aryl)
- RMN ¹³C(CDCl₃, δppm/TMS):: 14, 0 (s,1C, Ar-CH-CH₃)
20,3 (s,1C, CH₃ isopropyl)
20,5 (s,1C, CH₃ isopropyl)
50,5 (s, 1C, CH benzyl)
61,3 (s, 1C, CH isopropyl)
125,4 (s, 2C, CH aryl)
127,4 (s, 1C, CH aryl)
128,3 (s, 2C_CH aryl)
140,4 (s, 1C, C^{IV} aryl)
- RMN ¹¹B(CDCl₃, δppm/Et₂O.BF₃):: -21, 0 (q, 1B, ¹J_{BH} = 90 Hz, BH₃).

### Préparation du [(méthylbenzyl)(isopropyl)amino]borane

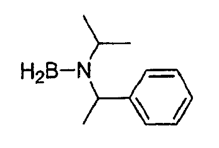

Par un procédé analogue à celui de l'exemple 1, on a préparé le [(méthylbenzyl)(isopropyl)amino]borane en utilisant le complexe (méthylbenzyl)(isopropyl)amine-borane à la place du complexe diisopropylamine-borane. Le [(méthylbenzyl)(isopropyl)]aminoborane distille en tête de colonne vers 74°C sous 0,01 mm Hg. On récupère 1,99 g (11,4 mmol) d'une huile incolore, correspondant à un rendement de 94 %.
Caractéristiques spectroscopiques :
- RMN ¹H (CDCl₃, δppm/TMS):: 1,13 (d, 3H, ³J_{HH}=6,7 Hz, CH₃ isopropyl)
1,28 (d, 3H, ³J_{HH}=6,7 Hz, CH₃ isopropyl)
1,68 (d, 3H, ³J_{HH}=7 Hz, Ar-CH-CH₃)
3,26 (hept,, 1H, ³J_{HH}=6,7 Hz, CH isopropyl)
4,64 (q, 1H, ³J_{HH}=7 Hz, Ar-CH-CH₃)
7,40 (m, 5H, CH aryl)
- RMN ¹³C(CDCl₃, δppm/TMS):: 23,7 (s, 1C, Ar-CH-CH₃)
25,8 (s, 1C, CH₃ isopropyl)
26,2 (s, 1C, CH₃ isopropyl)
52,0 (s, 1C, CH isopropyl)
62,8 (s, 1C, Ar-CH-CH₃)
127,4 (s, C, CH aryl)
127,5 (s, 2C, CH aryl)
128,7 (s, 1C, CH aryl)
144,6 (s, 1C, C^{IV} aryl)
- RMN ¹¹B (CDCl₃, δppm/Et₂O.BF₃):: 35, 8 (t, 1B, ¹J_{BH}=114,9 Hz, BH₂)
- Spectrométrie de masse :: calculée pour C₁₁H₁₈BN]^{+.}: 175,15323
Trouvée (i.e.): 175,1493 (22 ppm)
- Infra-rouge:: 2461, 2496 et 2542 cm⁻¹ (v_{BH}).

### Préparation du (p-méthoxyphényl)[(méthylbenzyl)-(isopropyl)amino]borane

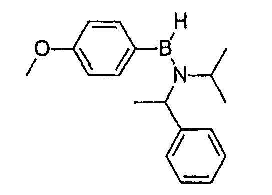

Par un procédé analogue à celui de l'exemple 3, on a préparé le borane ci-dessus en utilisant le [(méthylbenzyl)-(isopropyl)amino]borane à la place du dicyclohexylaminoborane. On a isolé 1,546 g (Rdt = 51%) d'une huile incolore, par distillation à 125°C sous une pression de 0,01 mm Hg. Les caractéristiques spectroscopiques sont les suivantes :
- RMN¹H (CDCl₃, δppm/TMS):: 1,06 (d, 3H, ³J_{HH}=6,63Hz, CH₃ isopropyl)
1,42 (d, 3H, ³J_{HH}=6,63Hz, CH₃ isopropyl)
1,74 (d, 3H, ³J_{HH}=6,99Hz, Ph-CH-CH₃)
3,18 (hept, 1H, ³J_{HH}=6,63Hz, CH isopropyl)
3,92 (s, 3H, O-CH₃)
5,50 (q, 1H, ³J_{HH}=6,99Hz, Ph-CH-CH₃)
7,05 (d, 2H, ³J_{HH}=8,70Hz, CH aryl)
7,42 (m, 5H, CH phenyl)
7,67 (d, 2H, ³J_{HH}=8,70Hz, CH aryl)
- RMN¹³C (CDCl₃, δppm/TMS):: 19,2 (s, 1C, Ph-CH-CH₃)
26,0 (s, 1C, CH₃ isopropyl)
28,0 (s, 1C, CH₃ isopropyl)
47,0 (s, 1C, CH isopropyl)
55,1 (s, 1C, O-CH₃)
55,9 (s, 1C, Ph-CH-CH₃)
113,6 (s, 2C, CH aryl)
127,1 (s, 2C, CH phenyl)
127,9 (s, 2C, CH phenyl)
128,7 (s, 1C, CH phenyl)
135,4 (s, 2C, CH aryl)
142,5 (s, 1C, C^{IV} phenyl)
160,1 (s, 1C, C^{IV}-OMe aryl)
- RMN¹¹B (CDCl₃, δppm/Et₂O.BF₃):: 39,2 (s large, 1B, ν_{1/2}= 674,0 Hz, BH)
- Infra-rouge:: 2414 et 2464 cm⁻¹ (ν_{BH})
- Spectrométrie de masse :: calculée pour C₁₈H₂₄NOB]^{+.} : 281,19509
trouvée (i.e.): 281.19474 (1 ppm).

## Revendications

1. Composé répondant à la formule A-BH-NR¹R² dans laquelle :
- R¹ et R² sont des groupes identiques ou différents choisis parmi les groupes alkyles linéaires, les groupes alkyles ramifiés, les groupes alkyles cycliques, les groupes arylalkyles, ou bien les deux groupes R¹ et R² forment ensemble un groupe alkylène, et
- A représente:
a) un groupe aromatique éventuellement polycondensé, portant éventuellement au moins un substituant
b) un groupe hétéroaromatique éventuellement polycondensé, portant éventuellement au moins un substituant
c) un groupe choisi parmi les groupes vinyles, diényles, polyényles et alcynyles, portant éventuellement au moins un substituant
lesdits substituants éventuels des groupes définis en a), b) et c) étant choisis parmi les alkyles, les alkoxy, les amino, les dialkylamino, les halogènes, les groupements nitriles, les groupements esters, les groupements amides, les groupements aldéhydes protégés sous forme d'acétal ou de thioacétal, les groupements cétones protégés sous forme d'acétal ou de thioacétal, les groupements trialkylsilyle et les groupements dialkoxyboryle.

2. Composé selon la revendication 1, **caractérisé en ce qu'**un substituant R¹ ou R² est choisi parmi les alkyles linéaires ayant de 2 à 20 atomes de carbone, les alkyles ramifiés ayant de 3 à 20 atomes de carbone, les cycloalkyles ayant de 3 à 20 atomes de carbone.

3. Composé selon la revendication 1, **caractérisé en ce que** les substituants R¹ et R² sont des groupes chiraux.

4. Composé selon la revendication 1, **caractérisé en ce qu'**un substituant R¹ ou R² est un groupe R⁸-Ph-CH(R³) dans lequel Ph représente un groupe phényle, R⁸ représente H ou un substituant choisi parmi les halogènes, les alkyles, les alkoxy, les alkylthio, les groupements cétones protégés sous forme d'acétal ou de thioacétal, et les groupements trialkylsilyle, et R³ est un groupe alkyle ayant de 1 à 20 atomes de carbone.

5. Composé selon la revendication 1, **caractérisé en ce que** le substituant A est un phényle, un tolyle ou un méthoxyphényle.

6. Composé selon la revendication 1, **caractérisé en ce que** R¹ et R² forment un groupe alkylène répondant à la formule -CR⁴R⁵- (CH₂)ₙ-CR⁶R⁷- dans laquelle 3≤n≤5 et les substituants R⁴ à R⁷ sont choisis indépendamment les uns des autres parmi H et les radicaux alkyles ayant de 1 à 20 atomes de carbone.

7. Composé selon la revendication 6, **caractérisé en ce que** le groupe alkylène est le 1,1,5,5-tétraméthylpentylène.

8. Procédé de préparation d'un composé selon la revendication 1, comprenant deux étapes, dans lequel :
• Au cours de la première étape, on prépare un complexe amine-borane R¹R²NH.BH₃, puis on le transforme en aminoborane R¹R²NBH₂ par chauffage.
• Au cours de la deuxième étape, on fait réagir l'aminoborane R¹R²NBH₂ avec un composé A-X dans lequel X est un groupe partant, en présence d'une quantité catalytique d'un complexe d'un métal de transition et d'une base, dans un solvant organique aprotique ou une base, puis on élimine sous vide le solvant et les réactifs excédentaires.

9. Procédé selon la revendication 8, **caractérisé en ce que**, pour préparer le complexe amine-borane lors de la première étape, on fait réagir sous atmosphère inerte, une amine R¹R²NH avec une source de borane dans un solvant aprotique polaire à une température inférieure à 50°C, puis on élimine le solvant sous vide.

10. Procédé selon la revendication 9, **caractérisé en ce que** la source de borane est un complexe commercial tel que Me₂S.BH₃ ou THF.BH₃.

11. Procédé selon la revendication 9, **caractérisé en ce que** le solvant aprotique polaire utilisé dans la première étape est choisi parmi les éthers.

12. Procédé selon la revendication 11, **caractérisé en ce que** le solvant aprotique polaire est le THF, le dioxane, le DME ou diglyme, ou le tertiobutylméthyléther (TBDME).

13. Procédé selon la revendication 8, **caractérisé en ce que**, au cours de la première étape, le complexe amine-borane est préparé par réaction du chlorhydrate de l'amine R¹R²NH,HCl avec NaBH₄ ou KBH₄, puis le complexe amine-borane R¹R²NH.BH₃ est isolé par filtration et élimination du solvant.

14. Procédé selon la revendication 8, **caractérisé en ce que** l'aminoborane R¹R²NBH₂ obtenu par chauffage du complexe amine-borane est récupéré par par distillation.

15. Procédé selon la revendication 8, **caractérisé en ce que** le solvant organique de la deuxième étape est choisi parmi les carbures aromatiques, les amines et les éthers.

16. Procédé selon la revendication 8, **caractérisé en ce que** la base introduite dans le milieu réactionnel lors de la deuxième étape du procédé est choisie parmi les trialkylamines cycliques ou linéaires, les amines secondaires cycliques ou linéaires, les amines aromatiques du type pyridine ou quinoléine.

17. Procédé selon la revendication 8, **caractérisé en ce que** le complexe d'un métal de transition est un composé de palladium stabilisé par un ligand.

18. Procédé selon la revendication 17, **caractérisé en ce que** le composé de palladium est choisi parmi PdCl₂, le diacétylacétonate de palladium Pd(acac)₂, l'acétate de palladium Pd(OAc)₂, le cyanure de palladium Pd(CN)₂, le chlorure d'allylpalladium (CH₂=CHCH₂PdCl)₂.

19. Procédé selon la revendication 17, **caractérisé en ce que** le ligand est une phosphine, un arsine, un nitrile aromatique ou non, un isonitrile, une imine aromatique ou hétéroaromatique, ou un imidazo-2-ylidène.

20. Procédé selon la revendication 8, **caractérisé en ce que** le groupe partant est un atome d'halogène ou un groupement triflate, tosylate, mésylate, diazonium ou phosphate.

21. Procédé de préparation d'un arylboratrane, **caractérisé en ce qu'**il consiste à faire réagir un composé selon la revendication 1 avec une dihydroxyéthylamine.

22. Procédé de préparation d'un 2-aryl-5,5-diméthyl-1,3,2-dioxaborinane, **caractérisé en ce qu'**il consiste à faire réagir un composé selon la revendication 1 avec le 2,2-dimethylpropane-1,4-diol.

23. Procédé de préparation d'un acide arylboronique, **caractérisé en ce qu'**il consiste à faire réagir un composé selon la revendication 1 avec du méthanol en excès pour obtenir un aryldiméthoxyborane, puis à hydrolyser l'aryldiméthoxyborane.

24. Procédé de préparation d'un composé (B,B-diaryl)aminoborane, **caractérisé en ce qu'**il consiste à faire réagir un composé selon la revendication 1 avec un composé A-X en présence d'un catalyseur de Pd(0) et d'une base.

25. Procédé de préparation d'un composé A-A, **caractérisé en ce qu'**il consiste à faire réagir un composé selon la revendication 1 avec un composé A-Z en présence d'un catalyseur de Pd(0), d'une base et d'eau.

## Claims

1. A compound corresponding to the formula A-BH-NR¹R², in which:
- R¹ and R² are identical or different groups chosen from linear alkyl groups, branched alkyl groups, cyclic alkyl groups or arylalkyl groups, or else the R¹ and R² groups together form an alkylene group, and
- A represents:
a) an optionally polycondensed aromatic group optionally carrying at least one substituent,
b) an optionally polycondensed heteroaromatic group optionally carrying at least one substituent,
c) a group chosen from vinyl, dienyl, polyenyl or alkynyl groups optionally carrying at least one substituent,
said optional substituents of the groups defined in a), b) and c) being chosen from alkyls, alkoxys, aminos, dialkylaminos, halogens, nitrile groups, ester groups, amide groups, aldehyde groups protected in the acetal or thioacetal form, ketone groups protected in the acetal or thioacetal form, trialkylsilyl groups and dialkoxyboryl groups.

2. The compound as claimed in claim 1, **characterized in that** an R¹ or R² substituent is chosen from linear alkyls having from 2 to 20 carbon atoms, branched alkyls having from 3 to 20 carbon atoms or cycloalkyls having from 3 to 20 carbon atoms.

3. The compound as claimed in claim 1, **characterized in that** the R¹ and R² substituents are chiral groups.

4. The compound as claimed in claim 1, **characterized in that** an R¹ or R² substituent is an R⁸-Ph-CH(R³) group in which Ph represents a phenyl group, R⁸ represents H or a substituent chosen from halogens, alkyls, alkoxys, alkylthios, ketone groups protected in the acetal or thioacetal form, and trialkylsilyl groups, and R³ is an alkyl group having from 1 to 20 carbon atoms.

5. The compound as claimed in claim 1, **characterized in that** the A substituent is a phenyl, a tolyl or a methoxyphenyl.

6. The compound as claimed in claim 1, **characterized in that** R¹ and R² form an alkylene group corresponding to the formula -CR⁴R⁵-(CH₂)ₙ-CR⁶R⁷- in which 3≤n≤5 and the R⁴ to R⁷ substituents are chosen, independently of one another, from H and alkyl radicals having from 1 to 20 carbon atoms.

7. The compound as claimed in claim 6, **characterized in that** the alkylene group is 1,1,5,5-tetramethylpentylene.

8. A process for the preparation of a compound as claimed in claim 1, comprising two stages, in which:
• During the first stage, an amine-borane complex R¹R²NH·BH₃ is prepared and is then converted to aminoborane R¹R²NBH₂ by heating.
• During the second stage, the aminoborane R¹R²NBH₂ is reacted with a compound A-X, in which X is a leaving group, in the presence of a catalytic amount of a complex of a transition metal and of a base, in an aprotic organic solvent or a base, and then the excess reactants and solvent are removed under vacuum.

9. The process as claimed in claim 8, **characterized in that**, to prepare the amine-borane complex during the first stage, an amine R¹R²NH is reacted under an inert atmosphere with a borane source in a polar aprotic solvent at a temperature of less than 50°C and then the solvent is removed under vacuum.

10. The process as claimed in claim 9, **characterized in that** the borane source is a commercial complex, such as Me₂S·BH₃ or THF·BH₃.

11. The process as claimed in claim 9, **characterized in that** the polar aprotic solvent used in the first stage is chosen from ethers.

12. The process as claimed in claim 11, **characterized in that** the polar aprotic solvent is THF, dioxane, DME or diglyme, or tert-butyl methyl ether (TBDME).

13. The process as claimed in claim 8, **characterized in that**, during the first stage, the amine-borane complex is prepared by reaction of the hydrochloride of the amine R¹R²NH·HCl with NaBH₄ or KBH₄ and then the amine-borane complex R¹R²NH·BH₃ is isolated by filtration and removal of the solvent.

14. The process as claimed in claim 8, **characterized in that** the aminoborane R¹R²NBH₂ obtained by heating the amine-borane complex is recovered by distillation.

15. The process as claimed in claim 8, **characterized in that** the organic solvent of the second stage is chosen from ethers, amines and aromatic hydrocarbons.

16. The process as claimed in claim 8, **characterized in that** the base introduced into the reaction medium during the second stage of the process is chosen from cyclic or linear trialkylamines, cyclic or linear secondary amines, or aromatic amines of the pyridine or quinoline type.

17. The process as claimed in claim 8, **characterized in that** the complex of a transition metal is a palladium compound stabilized by a ligand.

18. The process as claimed in claim 17, **characterized in that** the palladium compound is chosen from PdCl₂, palladium diacetylacetonate Pd(acac)₂, palladium acetate Pd(OAc)₂, palladium cyanide Pd(CN)₂ or allylpalladium chloride (CH₂=CHCH₂PdCl)₂.

19. The process as claimed in claim 17, **characterized in that** the ligand is a phosphine, an arsine, an aromatic or nonaromatic nitrile, an isonitrile, an aromatic or heteroaromatic imine, or an imidazo-2-ylidene.

20. The process as claimed in claim 8, **characterized in that** the leaving group is a halogen atom or a triflate, tosylate, mesylate, diazonium or phospate group.

21. A process for the preparation of an arylboratrane, **characterized in that** it consists in reacting a compound as claimed in claim 1 with a dihydroxyethylamine.

22. A process for the preparation of a 2-aryl-5,5-dimethyl-1,3,2-dioxaborinane, **characterized in that** it consists in reacting a compound as claimed in claim 1 with 2,2-dimethylpropane-1,4-diol.

23. A process for the preparation of an arylboronic acid, **characterized in that** it consists in reacting a compound as claimed in claim 1 with excess methanol, in order to obtain an aryldimethoxyborane, and in then hydrolyzing the aryldimethoxyborane.

24. A process for the preparation of a (B,B-diaryl)aminoborane compound, **characterized in that** it consists in reacting a compound as claimed in claim 1 with a compound A-X in the presence of a Pd(0) catalyst and of a base.

25. A process for the preparation of a compound A-A, **characterized in that** it consists in reacting a compound as claimed in claim 1 with a compound A-Z in the presence of a Pd(0) catalyst, of a base and of water.

## Patentansprüche

1. Verbindung der Formel A-BH-NR¹R², worin:
- R¹ und R² gleiche oder unterschiedliche Gruppen, ausgewählt aus unverzweigten Alkylgruppen, verzweigten Alkylgruppen, zyklischen Alkylgruppen und Arylalkylgruppen, sind oder die zwei Gruppen R¹ und R² zusammen eine Alkylengruppe bilden, und
- A:
a) für eine gegebenenfalls polykondensierte aromatische Gruppe steht, die gegebenenfalls zumindest einen Substituenten aufweist,
b) für eine gegebenenfalls polykondensierte heteroaromatische Gruppe steht, die gegebenenfalls zumindest einen Substituenten aufweist,
c) für eine aus Vinyl-, Dienyl-, Polyenyl- und Alkinylgruppen ausgewählte Gruppe steht, die gegebenenfalls zumindest einen Substituenten aufweist,
wobei die möglichen Substituenten der unter a), b) und c) definierten Gruppen aus Alkyl, Alkoxy, Amino, Dialkylamino, Halogenen, Nitrilgruppen, Estergruppen, Amidogruppen, als Acetale oder Thioacetale geschützten Aldehydgruppen, als Acetale oder Thioacetale geschützten Ketongruppen, Trialkylsilylgruppen und Dialkoxyborylgruppen ausgewählt sind.

2. Verbindung nach Anspruch 1, **dadurch gekennzeichnet, dass** ein Substituent R¹ oder R² aus unverzweigtem Alkyl mit 2 bis 20 Kohlenstoffatomen, verzweigtem Alkyl mit 3 bis 20 Kohlenstoffatomen und Cycloalkyl mit 3 bis 20 Kohlenstoffatomen ausgewählt ist.

3. Verbindung nach Anspruch 1, **dadurch gekennzeichnet, dass** die Substituenten R¹ und R² chirale Gruppen sind.

4. Verbindung nach Anspruch 1, **dadurch gekennzeichnet, dass** ein Substituent R¹ oder R² eine Gruppe R⁸-Ph-CH(R³) ist, worin Ph für eine Phenylgruppe steht, R⁸ für H oder einen Substituenten, ausgewählt aus Halogenen, Alkyl, Alkoxy, Alkylthio, als Acetale oder Thioacetale geschützten Ketongruppen und Trialkylsilylgruppen, steht und R³ eine Alkylgruppe mit 1 bis 20 Kohlenstoffatomen ist.

5. Verbindung nach Anspruch 1, **dadurch gekennzeichnet, dass** der Substituent A Phenyl, Tolyl oder Methoxyphenyl ist.

6. Verbindung nach Anspruch 1, **dadurch gekennzeichnet, dass** R¹ und R² eine Alkylengruppe der Formel -CR⁴R⁵-(CH₂)ₙ-CR⁶R⁷- bilden, worin gilt: 3 ≤ n ≤ 5 und worin die Substituenten R⁴ bis R⁷ unabhängig voneinander aus H und Alkylresten mit 1 bis 20 Kohlenstoffatomen ausgewählt sind.

7. Verbindung nach Anspruch 6, **dadurch gekennzeichnet, dass** die Alkylgruppe 1,1,5,5-Tetramethylpentylen ist.

8. Verfahren zur Herstellung einer Verbindung nach Anspruch 1 in zwei Stufen, worin:
- im Verlauf der ersten Stufe ein Amin-Boran-Komplex R¹R²NH.BH₃ gebildet und dieser anschließend durch Erhitzen in ein Aminoboran R¹R²NBH₂ übergeführt wird;
- im Verlauf der zweiten Stufe das Aminoboran R¹R²NBH₂ in Gegenwart einer katalytischen Menge eines Komplexes aus einem Übergangsmetall und einer Base in einem aprotischen organischen Lösungsmittel oder einer Base mit einer Verbindung A-X umgesetzt wird, worin X eine Abgangsgruppe ist, und dann das Lösungsmittel und die überschüssigen Reaktanten im Vakuum entfernt werden.

9. Verfahren nach Anspruch 8, **dadurch gekennzeichnet, dass** zur Herstellung des Amin-Boran-Komplexes in der ersten Stufe unter Inertatmosphäre in einem polaren aprotischen Lösungsmittel bei einer Temperatur unter 50 °C ein Amin R¹R²NH mit einer Boranquelle umgesetzt wird und dann das Lösungsmittel im Vakuum entfernt wird.

10. Verfahren nach Anspruch 9, **dadurch gekennzeichnet, dass** die Boranquelle ein im Handel erhältlicher Komplex, wie z.B. Me₂S.BH₃ oder THF.BH₃, ist.

11. Verfahren nach Anspruch 9, **dadurch gekennzeichnet, dass** das in der ersten Stufe verwendete, polare aprotische Lösungsmittel aus Ethern ausgewählt wird.

12. Verfahren nach Anspruch 11, **dadurch gekennzeichnet, dass** das polare aprotische Lösungsmittel THF, Dioxan, DME oder Dlyme oder t-Butylmethylether (TBDME) ist.

13. Verfahren nach Anspruch 8, **dadurch gekennzeichnet, dass** im Verlauf der ersten Stufe der Amin-Boran-Komplex durch Umsetzung des Hydrochlorids des Amins, R¹R²NH.HCl, mit NaBH₄ oder KBH₄ hergestellt und der Amin-Boran-Komplex R¹R²NH.BH₃ anschließend durch Filtration und Entfernung des Lösungsmittels isoliert wird.

14. Verfahren nach Anspruch 8, **dadurch gekennzeichnet, dass** das durch Erhitzen des Amin-Boran-Komplexes erhaltene Aminoboran R¹R²NBH₂ durch Destillation gewonnen wird.

15. Verfahren nach Anspruch 8, **dadurch gekennzeichnet, dass** das organische Lösungsmittel der zweiten Stufe aus aromatischen Kohlenwasserstoffen, Aminen und Ethern ausgewählt wird.

16. Verfahren nach Anspruch 8, **dadurch gekennzeichnet, dass** die während der zweiten Stufe des Verfahrens in das Reaktionsmedium eingeführte Base aus zyklischen oder unverzweigten Trialkylaminen, zyklischen oder unverzweigten sekundären Aminen und aromatischen Aminen vom Pyridin- oder Chinolintyp ausgewählt wird.

17. Verfahren nach Anspruch 8, **dadurch gekennzeichnet, dass** der Komplex eines Übergangsmetalls eine durch einen Liganden stabilisierte Palladiumverbindung ist.

18. Verfahren nach Anspruch 17, **dadurch gekennzeichnet, dass** die PalladiumVerbindung aus PdCl₂, Palladiumdiacetylacetonat Pd(acac)₂, Palladiumacetat Pd(OAc)₂, Palladiumcyanid Pd(CN)₂ und Allylpalladiumchlorid (CH₂=CHCH₂PdCl)₂ ausgewählt wird.

19. Verfahren nach Anspruch 17, **dadurch gekennzeichnet, dass** der Ligand ein Phosphin, Arsin, aromatisches oder nichtaromatisches Nitril, Isonitril, aromatisches oder heteroaromatisches Imin oder ein Imidazo-2-yliden ist.

20. Verfahren nach Anspruch 8, **dadurch gekennzeichnet, dass** die Abgangsgruppe ein Halogenatom oder eine Triflat-, Tosylat-, Mesylat-, Diazonium- oder Phosphatgruppe ist.

21. Verfahren zur Herstellung eines Arylboratrans, **dadurch gekennzeichnet, dass** es darin besteht, eine Verbindung nach Anspruch 1 mit einem Dihydroxyethylamin umzusetzen.

22. Verfahren zur Herstellung von 2-Aryl-5,5-dimethyl-1,3,2-dioxaborinan, **dadurch gekennzeichnet, dass** es darin besteht, eine Verbindung nach Anspruch 1 mit 2,2-Dimethylpropan-1,4-diol umzusetzen.

23. Verfahren zur Herstellung einer Arylborsäure, **dadurch gekennzeichnet, dass** es darin besteht, eine Verbindung nach Anspruch 1 mit Methanol im Überschuss umzusetzen, um ein Aryldimethoxyboran zu erhalten, und anschließend das Aryldimethoxyboran zu hydrolysieren.

24. Verfahren zur Herstellung einer (B,B-Diaryl)aminoboran-Verbindung, **dadurch gekennzeichnet, dass** es darin besteht, eine Verbindung nach Anspruch 1 mit einer Verbindung A-X in Gegenwart eines Pd(0)-Katalysators und einer Base umzusetzen.

25. Verfahren zur Herstellung einer Verbindung A-A, **dadurch gekennzeichnet, dass** es darin besteht, eine Verbindung nach Anspruch 1 mit einer Verbindung A-Z in Gegenwart eines Pd(0)-Katalysators, einer Base und von Wasser umzusetzen.
